# EUROPÄISCHE PATENTANMELDUNG

(11) **EP 1 457 597 A2**
(43) Veröffentlichungstag der Anmeldung: **15.09.2004**
(21) Anmeldenummer: 04005688.9
(22) Anmeldetag: 10.03.2004
(51) Int. Cl.: D21B 1/32, B03D 1/00, D21C 5/02

(54) **Verfahren zur Regelung des Betriebes einer Flotationszelle**

(30) Priorität: 11.03.2003 AT 3722003
(71) Anmelder: Andritz AG, 8045 Graz (AT)
(72) Erfinder: Gabl, Helmuth, Dipl. Ing. Dr., 8045 Graz (AT); Gorton-Hülgerth, Andreas, Dipl. Ing. Dr., 8010 Graz (AT); Hertl, Erwin, Ing., 8111 Judendorf (AT)
(74) Vertreter: Schweinzer, Friedrich

(57) **Zusammenfassung**

Die vorliegende Erfindung betrifft ein Verfahren zur Regelung des Betriebes einer Flotationszelle, wobei das Flüssigkeitsniveau und das Schaumniveau in der Zelle gemessen und geregelt werden. Das erfindungsgemäße Verfahren ist dadurch gekennzeichnet, dass zumindest ein Qualitätsmerkmal des die Zelle verlassenden Gutstoffes gemessen wird und dass der bzw. die Sollwert(e) für das Flüssigkeitsniveau und/oder das Schaumniveau anhand dieses Qualitätsmerkmales festgelegt wird/werden.

Das erfindungsgemäße Verfahren eignet sich insbesondere bei der Flotation einer Fasersuspension, insbesondere bei der Deinking-Flotation.

## Beschreibung

Die Erfindung betrifft ein Verfahren zur Regelung des Betriebes einer Flotationszelle gemäß dem Oberbegriff des Patentanspruches 1.

Es ist bekannt, den Betrieb einer Flotationszelle anhand des in der Flotationszelle befindlichen Flüssigkeitsniveaus, der überlaufenden Schaummenge sowie anhand des Durchsatzes zu regeln, wobei der Durchsatz durch die erforderliche Produktion vorgegeben ist.

Bekannte Regelungen haben den Nachteil, dass sie relativ unflexibel sind. Insbesondere ist es schwierig, mittels der bekannten Regelungen einen günstigen Kompromiss zwischen der Qualität des die Zelle verlassenden Gutstoffes einerseits und dem Energieaufwand bzw. dem Verlust an Wertstoffen andererseits einzustellen.

In der DE 42 25 117 C1 wird eine Regelung vorgestellt, in welcher unter anderem die Stauhöhe des Schaums in der Schaumrinne einer Primärflotationszelle gemessen und anhand dieser Messgröße die Menge des die Primärzelle verlassenden Gutstoffes geregelt wird, sodass die Stauhöhe in der Schaumrinne der Primärflotationszelle konstant bleibt. Nach einem ähnlichen Prinzip wird auch in der Sekundärzelle das Verhältnis der zur Primärzelle geführten Rückmenge anhand der Niveauhöhe in der Schaumrinne der Sekundärzelle geregelt.

Auch mit diesem Verfahren wird jedoch keine flexiblere Regelung des Betriebes der Flotationszelle erreicht.

Die Probleme der Verfahren des Standes der Technik treten auch bei der Flotation von Faserstoffsuspensionen, insbesondere bei der Deinking-Flotation, auf.

Die Deinking-Flotation ist ein Verfahren zur Abtrennung von Störstoffen und Druckfarbenpartikel aus insbesondere in der Altpapieraufbereitung hergestellten Faserstoffsuspensionen. Dabei werden in einer geeigneten Flotationszelle hydrophobe Feststoffe wie Druckfarbenpartikel oder Stickies mit Gasblasen in Kontakt gebracht. Die anhaftenden Feststoffe werden mit den Gasblasen an die Flüssigkeitsoberfläche getragen und können dort als Schaum entfernt werden. Der Faserstoff wird aufgrund seines hydrophilen Charakters mit dem Gutstoff ausgetragen. Da eine 100%-ige Trennung zwischen Faserstoffen und Druckfarbenpartikel oder Stickies nicht erfolgt, besteht hier ein direkter Zusammenhang zwischen den Verlusten und der erreichten Reinigungswirkung.

Die vorliegende Erfindung stellt sich zur Aufgabe, ein Verfahren zur Verfügung zu stellen, welches die Nachteile der bekannten Verfahren zur Regelung des Betriebes einer Flotationszelle überwindet und eine flexiblere Regelung zur Verfügung stellt.

Beim erfindungsgemäßen Verfahren zur Regelung des Betriebes einer Flotationszelle werden das Flüssigkeitsniveau und das Schaumniveau in der Zelle gemessen und geregelt. Das Verfahren ist dadurch gekennzeichnet, dass zumindest ein Qualitätsmerkmal des die Zelle verlassenden Gutstoffes gemessen wird und dass der bzw. die Sollwert(e) für das Flüssigkeitsniveau und/oder das Schaumniveau anhand dieses Qualitätsmerkmales festgelegt wird/werden.

Es wird somit im Unterschied zu den bekannten Verfahren des Standes der Technik der Betrieb der Flotationszelle anhand der Qualität des die Zelle verlassenden Gutstoffes geregelt.

Damit kann die Regelung flexibler durchgeführt und der Prozess immer am optimalen Punkt hinsichtlich Energieverbrauch und Verlust von Wertstoffen gehalten werden.

Als Qualitätsmerkmal wird bevorzugt ein Merkmal aus der Gruppe bestehend aus Weiße, Helligkeit, Farbart, Anzahl der Schmutzpunkte und/oder Anzahl der Stickies im Gutstoff gemessen.

Das Flüssigkeitsniveau in der Zelle wird über ein Auslassventil gesteuert.

Das Schaumniveau in der Zelle wird über die eingebrachte Luftmenge gesteuert. Im Fall der Verwendung einer selbstansaugenden Düse kann dies durch Variation der Flüssigkeitsmenge bewerkstelligt werden. Im Fall der Einblasung von Luft kann das Schaumniveau durch direkte Regelung der Luftmenge eingestellt werden. Durch die gezielte Variation der Luftmenge kann der Betriebspunkt in bezug auf Reinheit, Energieverbrauch und Wertstoffverlust, und z.B. bei der Deinking-Flotation hinsichtlich Faserverlust und Entaschung, optimiert werden.

### Dabei beeinflussen folgende Parameter das Flotationsergebnis:

Schaumhöhe über Flüssigkeit: Eine hohe Schaumhöhe bedeutet weniger Faserverlust und höhere Schaumkonsistenz, aber auch einen höheren Energieverbrauch zur Einbringung der benötigten Luftmenge.

Schaumhöhe über dem Wehr der Flotationszelle: Diese ist proportional der überlaufenden Schaummenge. Eine große Überlaufmenge bedeutet eine gute Reinigungswirkung, aber andererseits große Verluste.

Mit der Höhe des Flüssigkeitsniveaus in der Zelle können diese beiden Parameter unabhängig voneinander gesteuert werden.

Ein weiterer Parameter ist die Blasengröße: Die Blasengröße beeinflusst die Steiggeschwindigkeit der Blasen und die potentielle Kontaktfläche. Damit kann die Flotation selektiv auf die Größe der auszuscheidenden Partikel eingestellt werden.

Eine bevorzugte Ausführungsform des erfindungsgemäßen Verfahrens ist dadurch gekennzeichnet, dass die Flotationszelle aus mehreren Teilzellen besteht. Dabei kann das Schaumniveau in jeder der Teilzellen gemessen werden, oder es wird das Schaumniveau nur in einer Teilzelle bzw. nur in einem Teil der Teilzellen gemessen.

Das erfindungsgemäße Verfahren kann in einer Primärflotationszelle, aber auch in einer Sekundärflotationszelle durchgeführt werden.

Die vorliegende Erfindung betrifft auch die Verwendung des erfindungsgemäßen Verfahrens bei der Flotation einer Fasersuspension, insbesondere bei der Deinking-Flotation.

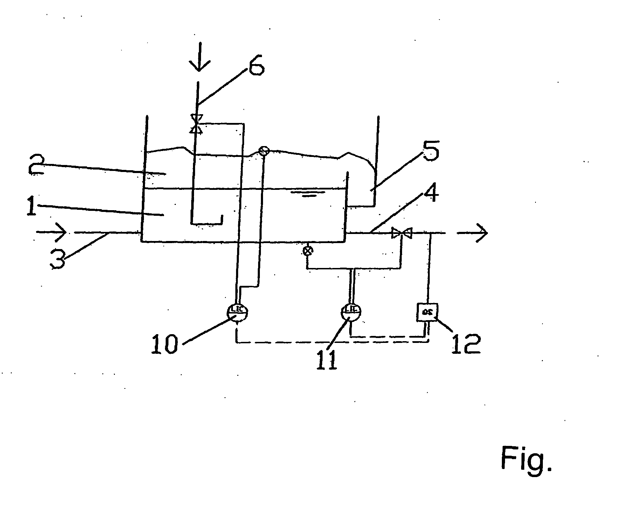

Im folgenden wird eine bevorzugte Ausführungsform der Erfindung anhand der Figur näher erläutert:

Dabei zeigt die Figur schematisch eine Regelung gemäß der vorliegenden Erfindung. Der zu flotierende Stoff fließt durch den Einlauf (3) in den Flüssigkeitsraum (1). Durch die über die Luftzufuhr (6) eingebrachte Luft entsteht der Schaum (2), der über ein Wehr in den Überlauf (5) rinnt. Die Lufteinbringung kann durch Kompressoren, durch selbstansaugende Düsen oder ähnliches erfolgen.

Die gereinigte Flüssigkeit verlässt die Anlage durch den Auslauf (4).

Das Flüssigkeitsniveau wird über den Regelkreis (11) gesteuert, das Schaumniveau über den Regelkreis (10). Die Vorgaben für die Sollwerte der beiden Niveaus stammen aus dem Qualitätsmeßsystem (12), welches - je nach Anwendung - Weiße, Schmutzpunkte, Anzahl der Stickies oder andere Qualitätsmerkmale des die Zelle verlassenden Gutstoffes misst.

## Patentansprüche

1. Verfahren zur Regelung des Betriebes einer Flotationszelle, wobei das Flüssigkeitsniveau und das Schaumniveau in der Zelle gemessen und geregelt werden, **dadurch gekennzeichnet, dass** zumindest ein Qualitätsmerkmal des die Zelle verlassenden Gutstoffes gemessen wird und dass der bzw. die Sollwert(e) für das Flüssigkeitsniveau und/oder das Schaumniveau anhand dieses Qualitätsmerkmales festgelegt wird/werden.

2. Verfahren gemäß Anspruch 1, **dadurch gekennzeichnet, dass** als Qualitätsmerkmal ein Merkmal aus der Gruppe bestehend aus Weiße, Helligkeit, Farbart, Anzahl der Schmutzpunkte und/oder Anzahl der Stickies im Gutstoff gemessen wird.

3. Verfahren gemäß Anspruch 1 oder Anspruch 2, **dadurch gekennzeichnet, dass** die Flotationszelle aus mehreren Teilzellen besteht.

4. Verfahren gemäß Anspruch 3, **dadurch gekennzeichnet, dass** das Schaumniveau in jeder der Teilzellen gemessen wird.

5. Verfahren gemäß Anspruch 3, **dadurch gekennzeichnet, dass** das Schaumniveau nur in einer Teilzelle bzw. nur in einem Teil der Teilzellen gemessen wird.

6. Verfahren gemäß einem der vorhergehenden Ansprüche, **dadurch gekennzeichnet, dass** es in einer Primärflotationszelle durchgeführt wird.

7. Verfahren gemäß einem der vorhergehenden Ansprüche, **dadurch gekennzeichnet, dass** es in einer Sekundärflotationszelle durchgeführt wird.

8. Verwendung des Verfahrens gemäß einem der vorhergehenden Ansprüche bei der Flotation einer Fasersuspension, insbesondere bei der Deinking-Flotation.
